# EUROPEAN PATENT APPLICATION

(11) **EP 3 382 044 A1**
(43) Date of publication of application: **03.10.2018**
(21) Application number: 16886149.0
(22) Date of filing: 26.12.2016
(51) Int. Cl.: C22B 7/00, C22B 15/00, C22B 58/00, C01B 19/02

(54) **RECOVERY METHOD FOR COPPER-INDIUM-GALLIUM-SELENIUM MATERIAL**

(30) Priority: 21.01.2016 CN 201610039563
(71) Applicant: Hanergy New Material Technology Co., Ltd., Yanqi Industrial Development Zone Huairou District Beijing 101407 (CN)
(72) Inventor: LIU, Junfei, Beijing 100107 (CN); GAO, Yongtao, Beijing 100107 (CN); WANG, Guan, Beijing 100107 (CN); WU, Guofa, Beijing 100107 (CN); PENG, Kan, Beijing 100107 (CN)
(74) Representative: Cabinet Beau de Loménie
(86) International application number: PCT/CN2016/112139
(87) International publication number: WO 2017/124890

(57) **Abstract**

Provided is a recovery method for a copper-indium-gallium-selenium material, mainly comprising the steps of sulfuric acid aeration leaching at a high temperature, reducing selenium with sodium sulfite, separating copper by extracting, separating indium and gallium with an alkali, replacing indium, electrolyzing gallium, etc. In the recovery method for a copper-indium-gallium-selenium material, a sulfuric acid aeration leaching means is used, thus reducing acid gas pollution; at the same time, an extraction agent for copper is used to extract copper, wherein the separating effect is good and the cost is low, and the extracted copper is directly electrolyzed so as to obtain a high-purity metal copper; moreover, an alkali is used to separate gallium, wherein realizing the separation of indium and gallium only requires the adjustment of the pH value of a solution, the separating effect is good and the obtained indium and gallium products have a relatively high purity.

## Description

### Technical Field

The present invention relates to a method for recovering copper indium gallium selenide photovoltaic components, in particular to a method for recovering copper indium gallium selenide materials.

### Background Art

Copper indium gallium selenide thin-film solar cells are favored by the market due to their many advantages. They have been the most interest in R&D, scaled production and application of thin-film solar cells in recent years. The absorption layer of copper indium gallium selenide solar cells has a chalcopyrite structure composed of four elements, i.e. copper, indium, gallium and selenium, in an optimum ratio. The absorbable spectrum has a broad wavelength range. In addition to the visible spectrum which can be absorbed by amorphous silicon solar cells, the spectrum can also cover the near-infrared region with a wavelength between 700 and 2000 nm, which means the longest duration in a day for power generation. The total power generation provided by copper indium gallium selenide thin-film solar cells per day is over 20% more than that provided by crystalline silicon solar cells of the same wattage level. Crystalline silicon cells are inherently characterized by light induced degradation: after a prolonged exposure to sunlight, their power generation performance will gradually diminish. In contrast, copper indium gallium selenide solar cells are free from light induced degradation and have high power generation stability. Crystal silicon solar cells have hot spots after power generation for a long period of time, resulting in reduced power generation and increased maintenance costs. In contrast, copper indium gallium selenide solar cells can adopt an internal connection structure, which can avoid the occurrence of this phenomenon and requires lower maintenance costs than crystalline silicon solar cells.

The methods for manufacturing copper indium gallium selenide thin-film solar cells include vacuum sputtering, distillation and non-vacuum coating. No matter which manufacturing method is used, some copper indium gallium selenide waste materials may be produced during the manufacturing process. These waste materials contain rare metals such as indium, gallium and selenium, in addition to heavy metal copper. To help the continued use of rare metals such as indium, gallium and selenium and heavy metal copper, they need to be separated and separately recovered to facilitate further recycling, to ensure the sustainable development of copper indium gallium selenide thin-film solar cell materials. In the prior art, the main methods for recovering copper indium gallium selenide waste materials are combined wet or pyrometallurgical refining methods such as acid dissolution, extraction, oxidative distillation, etc.

Chinese patent application publication No. CN102296178A discloses a method for recovering copper indium gallium selenide, and specifically discloses a method of dissolving metal powders containing copper indium gallium selenide by a mixture of hydrochloric acid and hydrogen peroxide. This method uses hydrazine to reduce selenium, uses metal indium to replace copper, and separates indium from gallium by a combination of a supported liquid membrane and a dispersed stripping solution.

Chinese patent application publication No. CN103184388A discloses a method for recovering copper indium gallium selenide. In the method, the copper indium gallium selenide thin-film solar panels are first crushed into pieces, which are then soaked in a soaking process with a mixed system of sulfuric acid and hydrogen peroxide under a specified temperature for a specified time to give the soaking solution. Indium, gallium and selenium elements are then recovered by processes such as extraction, reverse extraction, electrolysis, and the like.

U.S. Patent No. 5,779,877 discloses a method for recovering copper indium selenide solar cell waste materials. The method mainly includes crushing, leaching with nitric acid, separating copper, selenium and indium with dual-electrode electrolysis, obtaining a mixture of indium and zinc oxides by evaporation and decomposition, and separating copper and selenium by oxidative distillation.

In the above-mentioned prior art techniques, leaching with hydrochloric acid and hydrogen peroxide would consume a large amount of oxidants. In addition, hydrochloric acid is volatile. The leaching reaction is an exothermic reaction, resulting in volatilization of a large amount of hydrochloric acid and relatively serious pollution. At the same time, the extractant used for extracting indium leads to a phenomenon of co-extraction of gallium, which makes it difficult to separate indium from gallium, thereby reducing the recovery rate of gallium. On the other hand, the method of replacing copper with indium leads to very high production costs.

### Summary of Invention

To solve the above-mentioned defects in the prior art, the present invention aims to provide a method for recovering copper indium gallium selenide material which can reduce environmental pollution and has high indium recovery rate and lower production cost.

The method for recovering copper indium gallium selenide waste material according to the present invention uses sulfuric acid in a high temperature aeration leaching to reduce acid gas pollution. At the same time, a copper extractant is used for copper extraction. The separation effect is good and the cost is low. The extracted copper is directly electrolyzed to give high-purity copper metal. On the other hand, gallium is separated under basic conditions. Separation of indium from gallium can be achieved by merely adjusting the pH of the solution. The separation effect is good, and the resulted indium and gallium products have relatively high purities.

The method for recovering copper indium gallium selenide material according to the present invention comprises the following steps.

In step A, the copper indium gallium selenide waste material is placed in a ball mill for ball milling.

In step B, the copper indium gallium selenide powders are added to a sulfuric acid solution and heated to 90 to 100 °C, and air is introduced into the heated solution for leaching.

In step C, sodium sulfite is added to the solution, and the solution is heated and stirred, during which sodium sulfite reacts with sulfuric acid to generate sulfur dioxide gas, which then reacts with selenic acid to produce selenium.

In step D, sodium hydroxide is added to the solution to adjust the pH, followed by adding a copper extractant, preferably AD-100N (a high-efficiency copper extractant), to extract copper ions. The extract is then subjected to a reverse extraction to give a copper sulfate solution, which is electrolyzed to give copper metal.

In step E, sodium hydroxide is added to the raffinate obtained in step D to adjust the pH to above 12. After standing, the supernatant is drawn, and the precipitate is filtered and washed with water. The obtained filter residue is indium hydroxide, and the obtained solution is a sodium gallate solution.

In step F, the sodium gallate solution obtained in step E is electrolyzed to give gallium metal.

In step G, indium hydroxide obtained in step E is dissolved by hydrochloric acid, and indium is replaced with zinc to give indium metal.

The method for recovering copper indium gallium selenide material according to the present invention further comprises in step A that the copper indium gallium selenide waste material is ball milled to below 80 mesh.

The method for recovering copper indium gallium selenide material according to the present invention further comprises in step B that a certain volume of a sulfuric acid solution having a molar concentration of 1.5 to 6 mol/L is taken, and the copper indium gallium selenide powders are added into the above sulfuric acid solution at a liquid-solid ratio of 2:1 to 8:1 and heated to 95 °C. Air is introduced into the heated solution and the leaching lasts for 12 hours.

The method for recovering copper indium gallium selenide material according to the present invention further comprises in step C that the solution is heated to above 60 °C, and stirred to react for at least 2 hours.

The method for recovering copper indium gallium selenide material according to the present invention further comprises in step D that the pH is adjusted to 1.2 to 2.2, and the ratio of the extractant and the solution phase is 1:1, and the extraction is conducted in two stages for 10 times, each extraction lasting for 6 min.

The method for recovering copper indium gallium selenide material according to the present invention further comprises in step D that 1.5 mol/L sulfuric acid is taken under ambient temperature, and added to the extractant with a ratio of the extractant and sulfuric acid being 1:1 to conduct a 10-stage reverse extraction, each stage lasting for 6 min. The conditions for the electrolysis of the copper sulfate solution are as follows: electrolysis voltage, 1.8 V; current density, 250 A/m²; electrolyte temperature controlled at about 45 to 60 °C; electrolysis time, 4 h.

The method for recovering copper indium gallium selenide material according to the present invention further comprises in step E that sodium hydroxide is added to the raffinate to adjust the pH, followed by heating the solution to above 80 °C for 0.5 hours. After standing, the supernatant is drawn, and the precipitate is filtered and washed with water. The obtained filter residue is indium hydroxide and the obtained solution is a sodium gallate solution.

The method for recovering copper indium gallium selenide material according to the present invention further comprises in step F that the conditions for the electrolysis of the sodium gallate solution are as follows: electrolysis voltage, 2.5 V; current density, 200 A/m², electrolyte temperature controlled at about 45 to 60 °C, electrolysis time, 6 h.

The method for recovering copper indium gallium selenide material according to the present invention further comprises in step G that indium hydroxide is dissolved by 0.5 mol/L hydrochloric acid, and indium is replaced with zinc at a temperature of 50 to 60 °C, in which a zinc plate is used for the replacement, and the replacement lasts for 8 h.

### Brief Description of Drawings

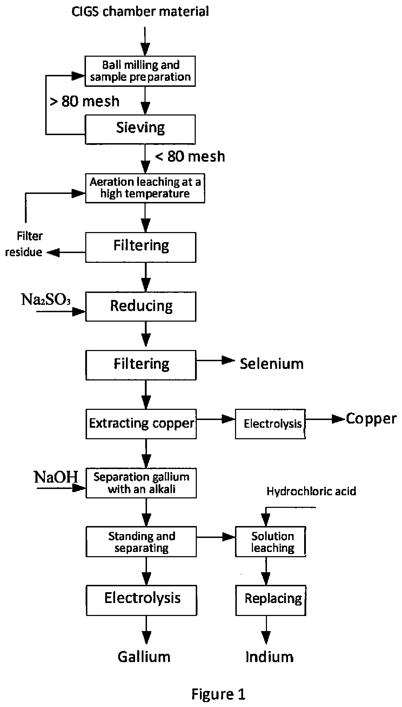

Figure 1 is a process flow chart of the present invention.

### Specific Embodiments

The embodiments of the present invention are further illustrated below with reference to the accompanying drawings.

As shown in Figure 1, the method for recovering copper indium gallium selenium material according to an example of the present invention mainly comprises the following steps.
Step 1, Ball milling and sample preparation: 400 g copper indium gallium selenide waste material was placed in a ball mill and ball milled to powders below 80 mesh.
Step 2, Sieving: The ball milled powders were sieved. Powders above 80 mesh were returned to step 1 for further ball milling.
Step 3, High temperature aeration leaching: 1600 ml of a sulfuric acid solution having a molar concentration of 3 mol/L was taken, and the copper indium gallium selenide powders were added to the above sulfuric acid solution and heated to 95 °C. Air was introduced into the heated solution. The leaching lasted for 12 hours, and the leaching rate can reach above 95%.
Step 4, Filtering: The filter residue was filtered out. In this step, the filter residue which is filtered out can also be returned to step 3 for secondary leaching.
Step 5, Reducing: 500 g sodium sulfite was added to the solution, and the solution was heated to 70 °C and stirred to react for 2 hours, during which sodium sulfite reacted with sulfuric acid to generate sulfur dioxide gas, which then reacted with selenic acid to produce selenium.
Step 6, Filtering: Selenium was obtained after filtration. The main elements remaining in the solution were only copper, indium and gallium.
Step 7, Extracting copper: Sodium hydroxide was added to the solution to adjust the pH to 1.8, followed by adding the extractant AD-100N (or Iix984 extractant) to extract copper ions. The extraction conditions were as follows: 400 ml extractant was taken under ambient temperature, and the ratio of the extractant and the solution phase was 1:1, and the extraction was conducted in two stages for 10 times, each extraction lasting for 6 min. The extract was subjected to a reverse extraction to give a copper sulfate solution, during which 400 ml of 1.5 mol/L sulfuric acid was taken under ambient temperature and added to the extractant with a ratio of the extractant and the acid for the reverse extraction being 1:1 to conduct a 10-stage reverse extraction, each stage lasting for 6 min.
Step 8: Electrolysis: The copper sulfate solution was electrolyzed under the following conditions: electrolysis voltage, 1.8 V; current density, 250 A/m²; electrolyte temperature controlled at about 50 °C; electrolysis time, 4 h. High-purity copper metal was obtained with a purity of 99.95%.
Step 9, Separating gallium with an alkali: NaOH was added to the raffinate obtained in Step 7 to adjust the pH to 13.5 (preferably making the pH above 13) and heated to 85 °C for 0.5 hour.
Step 10, Standing and separating: After standing for 2 hours, the supernatant was drawn, and the precipitate was filtered and washed with water. The obtained filter residue was indium hydroxide and the obtained solution was a sodium gallate solution.
Step 11: Electrolysis: The sodium gallate solution obtained in Step 10 was electrolyzed under the following conditions: electrolysis voltage, 2.5 V; current density, 200 A/m², electrolyte temperature controlled at about 50 °C, electrolysis time, 6 h. Gallium metal having a purity of 99.6% was obtained.
Step 12, Leaching: Indium hydroxide obtained in step 10 was dissolved by 500 mL of 0.5 mol/L hydrochloric acid.
Step 13, Replacing: Indium was replaced with zinc at a temperature of 55 °C, in which a zinc plate was used for the replacement, and the replacement lasted for 8 h, to give indium metal having a purity of 99%.

The above embodiments are only used to specifically illustrate the present invention. They do not impose any limit to the scope of protection of the present invention, which is determined by the claims. Many variants can be deduced or conceived according to well-known technologies in the art and the technical solution disclosed herein. All these variants should also be considered within the protection scope of the present invention.

## Claims

1. A method for recovering copper indium gallium selenide material, comprising the following steps:
step A, in which the copper indium gallium selenide waste material is placed in a ball mill for ball milling;
step B, in which the copper indium gallium selenide powders are added to a sulfuric acid solution and heated to 90 to 100 °C, and air is introduced into the heated solution for leaching;
step C, in which sodium sulfite is added to the solution, and the solution is heated and stirred, during which sodium sulfite reacts with sulfuric acid to generate sulfur dioxide gas, which then reacts with selenic acid to produce selenium;
step D, in which sodium hydroxide is added to the solution to adjust the pH to 1.2 to 2.2, followed by adding a copper extractant to extract copper ions; the extract is then subjected to a reverse extraction to give a copper sulfate solution, which is electrolyzed to give copper metal;
step E, in which sodium hydroxide is added to the raffinate obtained in step D to adjust the pH to above 12; after standing, the supernatant is drawn, and the precipitate is filtered and washed with water; the obtained filter residue is indium hydroxide, and the obtained solution is a sodium gallate solution;
step F, in which the sodium gallate solution obtained in step E is electrolyzed to give gallium metal; and
step G, in which indium hydroxide obtained in step E is dissolved by hydrochloric acid, followed by replacement to give indium metal.

2. The method for recovering copper indium gallium selenide material according to claim 1, wherein, in step A, the copper indium gallium selenide waste material is ball milled to below 80 mesh.

3. The method for recovering copper indium gallium selenide material according to claim 1, wherein, in step B, a certain volume of a sulfuric acid solution having a molar concentration of 1.5 to 6 mol/L is taken, and the copper indium gallium selenide powders are added into the above sulfuric acid solution at a liquid-solid ratio of 2:1 to 8:1 and heated to 95 °C; and air is introduced into the heated solution and the leaching lasts for 12 hours.

4. The method for recovering copper indium gallium selenide material according to claim 1, wherein, in step C, the solution is heated to above 60 °C, and stirred to react for at least 2 hours.

5. The method for recovering copper indium gallium selenide material according to claim 1, wherein, in step D, AD-100 extractant is used for extracting copper ions.

6. The method for recovering copper indium gallium selenide material according to claim 1, wherein, in step D, the conditions for the electrolysis of the copper sulfate solution are as follows:
electrolysis voltage, 1.8 V; current density, 250 A/m²; electrolyte temperature controlled at about 45 to 60 °C; electrolysis time, above 4 h.

7. The method for recovering copper indium gallium selenide material according to claim 1, wherein, in step E, sodium hydroxide is added to the raffinate to adjust the pH, followed by heating the solution to above 80 °C for 0.5 hours; after standing, the supernatant is drawn, and the precipitate is filtered and washed with water.

8. The method for recovering copper indium gallium selenide material according to claim 1, wherein, in step F, the conditions for the electrolysis of the sodium gallate solution are as follows:
electrolysis voltage, 2.5 V; current density, 200 A/m², electrolyte temperature controlled at about 45 to 60 °C, electrolysis time, above 6 h.

9. The method for recovering copper indium gallium selenide material according to claim 1, wherein, in step G, indium hydroxide is dissolved by 0.5 mol/L hydrochloric acid, a zinc plate or an aluminium plate is used for the replacement at a temperature of 50 to 60 °C, and the replacement lasts for above 8 h.
